# EUROPÄISCHE PATENTSCHRIFT

(11) **EP 0 531 465 B1**
(45) Veröffentlichungstag und Bekanntmachung des Hinweises auf die Patenterteilung: **21.06.1995**
(21) Anmeldenummer: 92902371.1
(22) Anmeldetag: 15.01.1992
(51) Int. Cl.: G01F 1/58

(54) **EINRICHTUNG ZUR INDUKTIVEN MESSUNG DES ZUSTANDES EINES STROMES ELEKTRISCH LEITFÄHIGER FLÜSSIGKEIT**
DEVICE FOR INDUCTIVELY MEASURING THE STATE OF A STREAM OF ELECTROCONDUCTIVE LIQUID
DISPOSITIF DE MESURE INDUCTIVE DE L'ETAT D'UN COURANT DE LIQUIDE ELECTROCONDUCTEUR

(30) Priorität: 15.01.1991 DE 4100987
(43) Veröffentlichungstag der Anmeldung: 17.03.1993
(73) Patentinhaber: KETELSEN, Broder, D-37124 Rosdorf (DE); KETELSEN, Andres, D-37124 Rosdorf (DE)
(72) Erfinder: KETELSEN, Broder, D-37124 Rosdorf (DE); KETELSEN, Andres, D-37124 Rosdorf (DE)
(74) Vertreter: Dorner, Jörg, Dr.-Ing.
(86) Internationale Anmeldenummer: EP9200075
(87) Internationale Veröffentlichungsnummer: WO9213256

(56) Entgegenhaltungen:
- EP-A- 0 183 859
- EP-A- 0 309 932
- DE-A- 3 244 473

## Beschreibung

Die Erfindung betrifft eine Einrichtung zur induktiven Messung des Zustandes eines Stromes elektrisch leitfähiger Flüssigkeit in einem Strömungskanal, welcher innerhalb eines isolierten Kanalabschnittes ein paar mit der Flüssigkeit Kontakt aufnehmender, in oder an der Kanalwand vorgesehener, über den Kanalquerschnitt hinweg einander gegenüberstehender Elektroden und ein Magnetfelderzeugungssystem zur Anregung eines den Flüssigkeitsstrom durchsetzenden, veränderlichen Magnetfeldes enthält, wobei die Elektroden über eine Signalleitungsanordnung mit einer Anzeige- bzw. Registriereinrichtung verbunden sind.

Unter der Bestimmung des Zustandes eines Stromes elektrisch leitfähiger Flüssigkeit in einem Strömungskanal ist sowohl die induktive Durchflußmessung als auch die induktive Bestimmung der Höhe des Querschnittes des Flüssigkeitsstromes bei nicht ganz ausgefülltem Kanalquerschnitt zu verstehen.

Soll mit einer Einrichtung der hier betrachteten allgemeinen Art der Durchfluß induktiv gemessen werden, so verwendet man ein Magnetfelderzeugungssystem, das magnetische Feldlinien erzeugt, die etwa parallel zu der die Elektroden enthaltenden Kanalquerschnittsebene und quer zur Verbindungslinie zwischen den Elektroden den Strömungskanal durchsetzen. Das resultierende Magnetfeld kann ein magnetisches Gleichfeld sein, doch vermeidet man bestimmte Schwierigkeiten, beispielsweise Polarisationserscheinungen an den Elektroden, durch Verwendung eines magnetischen Wechselfeldes oder eines Magnetfeldes aufgrund Anregung der Elektromagneten durch eine geschaltete Gleichstromquelle.

Soll hingegen die Höhe des Flüssigkeitsstromes in dem nicht ganz gefüllten Strömungskanalquerschnitt induktiv bestimmt werden, so durchsetzen die Feldlinien des Magnetfelderzeugungssystem den Strömungskanal in einer Richtung parallel zur Strömungskanalachse. Hierbei handelt es sich in jedem Fall um ein magnetisches Wechselfeld oder ein pulsierendes magnetisches Feld.

Ist der Strömungskanalquerschnitt von dem Flüssigkeitsstrom nicht ganz ausgefüllt, so bewirkt die Änderung des leitenden Querschnittes eine Verschiebung der induzierten elektrischen Feldlinien innerhalb des Flüssigkeitsstromes zwischen den Elektroden, so daß zwischen den Elektroden eine Potentialdifferenz auftritt, von der dann eine Anzeige bezüglich der Höhe des Flüssigkeitsstromes im Strömungskanal abgeleitet werden kann.

Die im wesentlichen achsparallel im Strömungskanal verlaufenden magnetischen Feldlinien und zugehörige Streufelder induzieren sowohl im Flüssigkeitsvolumen als auch in Leiterteilen der umgebenden Konstruktion und insbesondere in der Signalleiteranordnung zum Anschluß der Elektroden an die Anzeige- und Registriereinrichtung Spannungen, welche zu der interessierenden Meßspannung in Abhängigkeit von einer wechselnden Höhe des Flüssigkeitsstromes in Phase liegen, mit diesem Meßsignal aber eigentlich nichts zu tun haben, es verfälschen und durch phasenselektive Filterung nicht beseitigt werden können.

Nachdem solche Störspannungen, vornehmlich soweit durch induzierte Spannungen in der Signalleitungsanordnung verursacht, ganz beträchtliche Größenordnung annehmen können, kann in ihnen das interessierende Meßsignal untergehen, so daß die betreffende Einrichtung zur induktiven Messung der Höhe des Flüssigkeitsstromes im Strömungskanal unbrauchbar wird oder sehr teuere Konstruktionen zur Anwendung kommen müssen.

Die zuvor aufgezeigten Probleme gelten in entsprechender Weise auch für Einrichtungen zur induktiven Durchflußmessung unter Verwendung von Magnetfelderzeugungssystemen, deren erzeugte Feldlinien in wesentlichen quer durch den Strömungskanal verlaufen, soweit diese Magnetfelderzeugungssysteme aufgrund ihrer Konstruktion oder aufgrund von Ausrichtungsfehlern oder auch aufgrund von sich während des Betriebes einstellenden Unsymmetrien magnetische Feldkomponenten aufweisen, die parallel zur Längsachse des Strömungskanals orientiert sind, was in allen praktischen Fällen in sehr wohl beachtlichem Maße der Fall ist. Wegen der Verwendung magnetischer Wechselfelder oder pulsierender Magnetfelder auch für induktive Durchflußmesser und wegen der Notwendigkeit, eine Signalleitungsanordnung zur Verbindung der einander diametral gegenüberstehenden Elektroden zu der Anzeige- bzw. Registrierungseinrichtung vorzusehen, sind auch bei induktiven Durchflußmessern herkömmlicher Bauart Leiterschleifen vorhanden, in denen die erwähnten Axialkomponenten des magnetischen Wechselfeldes oder pulsierenden Magnetfeldes Störspannungen induzieren, welche das Meßergebnis verfälschen.

Aufgabe der Erfindung ist es demgemäß, eine Einrichtung mit den Merkmalen des Oberbegriffes von Patentanspruch 1 so auszugestalten, daß meßwertverfälschende Störsignale, welche von parallel zur Achse des Strömungskanales orientierten Magnetfeldkomponenten des Magnetfelderzeugungssystems bzw. von solchen magnetischen Streukomponenten verursacht sind, bei einfachem Aufbau und auch für eine Vielzahl von Konstruktionen des Magnetfelderzeugungssystems beseitigt werden können.

Diese Aufgabe wird erfindungsgemäß durch die kennzeichnenden Merkmale von Patentanspruch 1 gelöst.

Vorteilhafte Ausgestaltungen, Weiterbildungen und Abwandlungen derselben sind in den dem Anspruch 1 nachgeordneten Ansprüchen gekennzeichnet, deren Inhalt hierdurch ausdrücklich zum Bestandteil der Beschreibung gemacht wird, ohne an dieser Stelle den Wortlaut zu wiederholen.

Nachfolgend werden Ausführungsbeispiele anhand der Zeichnung näher erläutert. Es zeigen:
- Fig. 1: eine schematische, perspektivische Abbildung eines induktiven Durchflußmessers,
- Fig. 2: eine schematische, perspektivische Abbildung ähnlich derjenigen von Figur 1 zur Erläuterung des Zustandekommens einer Axialkomponente des Magnetfeldes und ihrer Wirkung,
- Fig. 3: eine schematische, perspektivische Abbildung eines induktiven Meßsystems zur Bestimmung der Höhe eines Flüssigkeitsstroms in einem Strömungskanal,
- Fig. 4: eine schematische, perspektivische Abbildung ähnlich derjenigen von Figur 3 zur Erläuterung des Zustandekommens von meßwertverfälschenden Störspannungen,
- Fig. 5: eine im Schnitt gezeichnete, schematische Darstellung des Strömungskanals, der Meßelektroden und der Signalleitungsanordnung,
- Fig. 6 bis 8: ähnliche Darstellungen wie Figur 5 von abgewandelten Formen der Signalleitungsanordnung und
- Fig. 9 bis 13: schematische, perspektivische Darstellungen des Strömungskanals, der Meßelektroden, der Signalleitungsanordnung und verschiedener Formen von Magnetfelderzeugungssystemen.

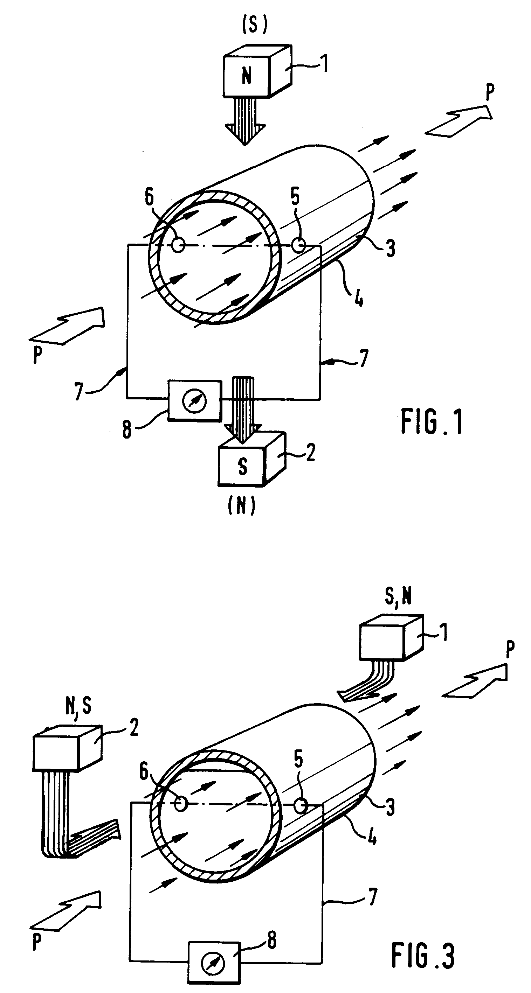

Figur 1 zeigt in schematischer Darstellungsweise einen induktiven Durchflußmesser, bei dem zwischen den Magnetpolen 1 und 2 des Magnetfelderzeugungssystems ein eine elektrisch isolierende Wand 3 aufweisender Kanalabschnitt 4 eines Strömungskanales hindurch verläuft, durch den eine elektrisch leitfähige Flüssigkeit in Axialrichtung hindurchgeführt wird, wie durch die Pfeile P angedeutet ist.

In demjenigen Bereich des Kanalabschnittes 4, in welchem die Feldlinien des Magnetfelderzeugungssystems den Innenraum des Strömungskanales durchdringen, sind an der Kanalinnenwand Elektroden 5 und 6 vorgesehen, welche über eine Signalleitungsanordnung 7 mit einer Anzeige - bzw. Registrierungseinrichtung 8 verbunden sind. Bewegt sich die elektrisch leitende Flüssigkeit in dem Kanalabschnitt 4 durch das im wesentlichen quer zur Verbindungslinie zwischen den Elektroden 5 und 6 und quer zur Strömungskanalachse orientierte Magnetfeld des Magnetfelderzeugungssystems hindurch, so werden in der Flüssigkeit Ströme induziert, die zu einer dem Durchfluß entsprechenden Potentialdifferenz zwischen den Elektroden 5 und 6 führen, die von der Anzeige- bzw. Registriereinrichtung 8 ausgewertet wird. Um nun Polarisationseffekte an den Oberflächen der Elektroden 5 und 6 zu vermeiden und andere meßtechnische Vorteile zu erzielen, verwendet man zur Anregung des Magnetfeldes einen durch Elektromagnete des Magnetfelderzeugungssystems geschickten Wechselstrom oder geschalteten Gleichstrom und wertet dann die an den Elektroden 5 und 6 auftretende, durchflußabhängige Wechselspannung oder pulsierende Gleichspannung in der Einrichtung 8 aus.

Da die zwischen den Magnetpolen 1 und 2 verlaufenden magnetischen Feldlinien im wesentlichen parallel zu der Ebene verlaufen, die von den Strompfaden durch die elektrisch leitende Flüssigkeit hindurch zwischen den Elektroden 5 und 6, ferner von der Signalleitungsanordnung 7 und von der Anzeige- bzw. Registrierungseinrichtung in Gestalt einer Leiterschleife aufgespannt wird, werden in dieser Leiterschleife auch dann, wenn das Magnetfeld zwischen den Magnetpolen 1 und 2 ein Wechselfeld oder ein pulsierendes Gleichfeld ist, keine Ströme induziert und die resultierende Wechselspannung oder pulsierende Gleichspannung zwischen den Elektroden 5 und 6 bleibt unverfälscht allein vom Durchfluß durch den Kanalabschnitt 4 abhängig.

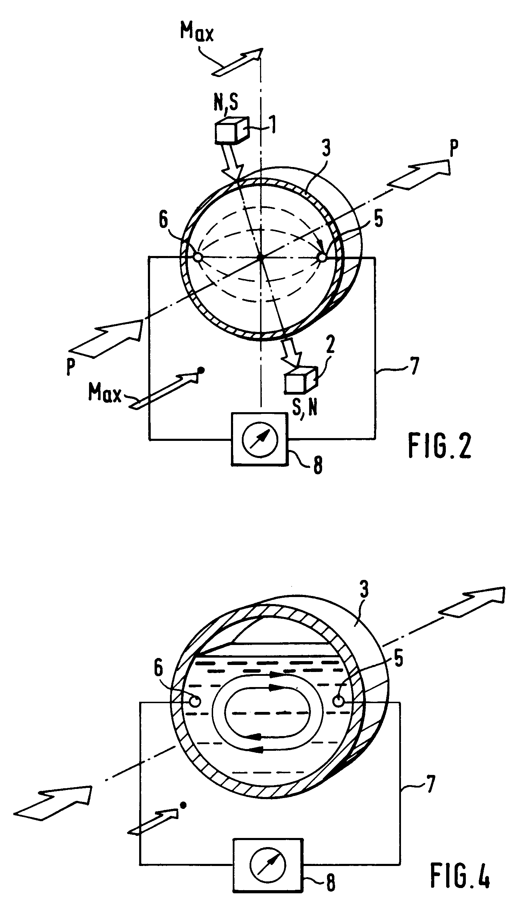

Sind aber, wie in Figur 2 gezeigt, beispielsweise die Magnetpole 1 und 2 parallel zur Strömungskanallängsachse stromaufwärts bzw. stromabwärts versetzt, so hat das Magnetfeld des Magnetfelderzeugungssystems eine Axialkomponente entsprechend dem Pfeil Mₐₓ, welche in einer die Elektroden 5 und 6 enthaltenden Radialebene mit Bezug auf die Strömungskanalachse innerhalb des Flüssigkeitsstromes Wirbelströme und über deren resultierendes Magnetfeld Störspannungen in der Leiterschleife aus den Strompfaden zwischen den Elektroden 5 und 6, der Signalleitungsanordnung 7 und der Anzeige- bzw. Registriereinrichtung induziert. Außerdem bewirken Streufelder entsprechend der Axialkomponente des Magnetfeldes unmittelbar die Induktion von Störspannungen in der genannten Leiterschleife. Der zu einer Axialkomponente des Magnetfeldes führende Verlauf der magnetischen Feldlinien zwischen den Magnetpolen 1 und 2 kann außer in einem unbeabsichtigten Versatz der Magnetpole auch seine Ursache in einer konstruktionsbedingt versetzten Anordnung von Elektromagneten des Magnetfelderzeugungssystems haben.

Bei einem induktiven Meßsystem zur Bestimmung der Höhe des Flüssigkeitsstromes im Strömungskanal haben die Magnetpole 1 und 2 des Magnetfelderzeugungssystems zur Erzeugung eines magnetischen Wechselfeldes oder eines pulsierenden magnetischen Gleichfeldes bewußt axialen Abstand voneinander längs der Achse des Strömungskanals. Die vom axial orientierten Magnetfeld induzierten Kreisströme innerhalb des Strömungskanals in Radialebenen zur Strömungskanallängsachse verlaufen bei vollständig gefülltem Strömungskanal, wenn dieser beispielsweise kreisförmigen Querschnitt hat, parallel zur Kanalinnenwand. Sinkt aber der Spiegel der Flüssigkeit im Strömungskanal ab, so verschieben die induzierten Kreisströme die Potentialverteilung in der leitenden Flüssigkeit zwischen den Meßelektroden, so daß eine füllhöhenabhängige Potentialdifferenz an den Elektroden 5 und 6 auftritt. Das axiale Magnetfeld und Streuanteile desselben induzieren außerdem in der Flüssigkeit Wirbelströme mit resultierenden axialen Magnetfeldern, welche in Zusammenwirkung mit den unmittelbar die erwähnte Leiterschleife durchsetzenden Magnetfeldkomponenten und Streukomponenten in der Leiterschleife zu Störspannungen führen.

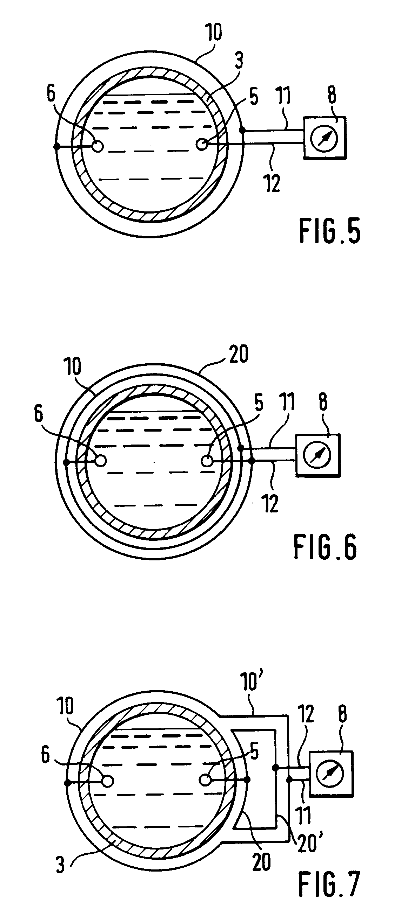

Signalleitungsanordnungen, welche bei induktiver Höhenmessung des Flüssigkeitsstromes im Strömungskanal, aber auch bei induktiver Durchflußmessung, Leiterschleifen vermeiden, in denen Störspannungen induziert werden können, sind in den Figuren 5 bis 8 schematisch gezeigt. Bei der zwischen den Elektroden 5 und 6 und der Anzeige- bzw. Registriereinrichtung 8 gelegenen Signalleitungsanordnung nach Figur 5 umschließt ein die isolierende Kanalwand 3 in geringem Abstand umgebender und mit der Elektrode 6 über eine Durchführung verbundener Kurzschluß-Leiterring 10 den Strömungskanal und ist an einer der Elektrode 6 diametral gegenüberliegenden Stelle über eine Abzweigleitung 11 an die Einrichtung 8 angeschlossen. Die Elektrode 5 ist über eine in unmittelbarer Nähe der Abzweigleitung 11 gelegene Abzweigleitung 12 ebenfalls mit der Einrichtung 8 verbunden. Die Abzweigleitungen 11 und 12 verlaufen im wesentlichen radial mit Bezug auf die Mittelachse des im Querschnitt kreisscheibenförmigen Strömungskanals. Axiale Magnetfelder oder Axialkomponenten von Magnetfeldern, welche Leiterschleifen in der Weise durchsetzen, daß an den Anschlüssen der Anzeige- bzw. Registriereinrichtung 8 Störspannungen auftreten, die sich dem nutzbaren Meßsignal überlagern, sind bei der Signalleitungsanordnung nach Figur 5 vermieden. In dem Kurzschluß-Leiterring 10 durch solche axialen Magnetfelder oder Magnetfeldkomponenten induzierte Ströme führen an dem Verbindungspunkt zwischen dem Kurzschluß-Leiterring 10 und der Abzweigleitung 11 nicht zu wesentlichen Potentialdifferenzen gegenüber der Anschlußstelle der Elektrode 6 an dem Kurzschluß-Leiterring 10, insbesondere dann, wenn der Kurzschluß-Leiterring 10 ausreichend niedrigen Widerstand hat, wobei es dann auf die Verteilung des den Kurzschluß-Leiterring 10 durchsetzenden Magnetfeldes innerhalb des Strömungskanalquerschnittes nicht wesentlich ankommt.

Im einzelnen ist aber festzustellen, daß es bevorzugte Lagen des Anschlußpunktes des Kurzschluß-Leiterringes 10 an die Abzweigleitung 11 gibt, wenn die Kraftliniendichte des axialen Magnetfeldes oder der axialen Magnetfeldkomponenten über den Querschnitt des Strömungskanales 4 hin nicht homogen ist, sondern zu bestimmten axialen Mittellängsebenen des Strömungskanalabschnittes 4 Symmetrien aufweist, was dazu führt, daß periodisch aufeinanderfolgend bestimmte Umfangsabschnitte des Kurzschluß-Leiterringes 10 während der wechselnden oder pulsierenden Einwirkung des Magnetfeldes generatorisch wirken und bestimmte andere Umfangsabschnitte als Verbraucher wirken. Dies hat zur Folge, daß in solchen Fällen die Potentialverteilung um den Kurzschluß-Leiterring 10 herum die Gestalt aufeinanderfolgender Schwingungsbäuche und Nulldurchgänge hat, wobei der Nullpegel durch das sich an der Elektrode 6 einstellende Potential vorgegeben ist. Nulldurchgänge außerhalb des Bereiches des Anschlusses der Elektrode 6 an den Kurzschluß-Leiterring sind Orte des bevorzugten Anschlusses der Abzweigleitung 11.

Allgemein kann gesagt werden, daß die möglichen Anschlußpunkte der Abzweigleitung 11 an den Kurzschluß-Leiterring 10 dort liegen, wo eine axiale Symmetrieebene des axialen Magnetfeldes oder der axialen Magnetfeldkomponenten den Leiterring 10 schneiden.

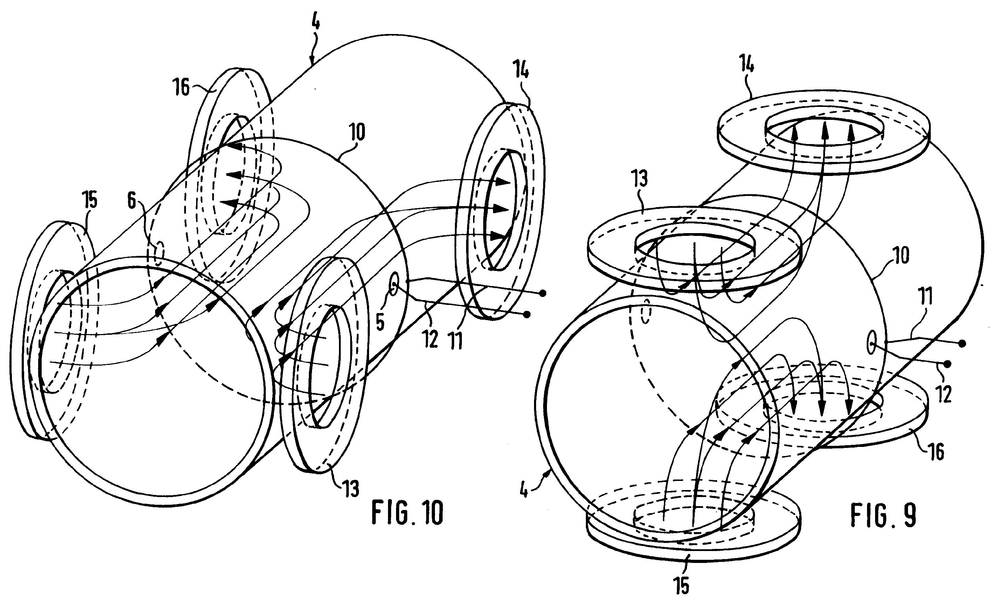

Vorstehende Ausführungen werden aus den Figuren 9 bis 13 deutlich.

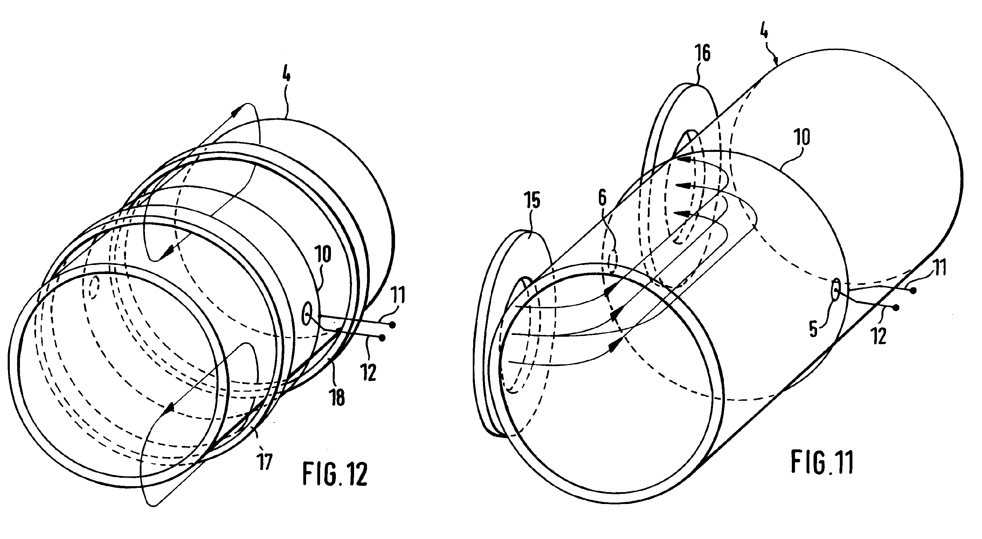

Figur 9 zeigt eine sowohl für die induktive Durchflußmessung als auch für die induktive Messung der Höhe des Flüssigkeitsstroms im Strömungskanal geeignete Einrichtung, bei der das Magnetfelderzeugungssystem von Paaren oberer und unterer Spulen gebildet ist, welche mit Bezug auf die die Elektroden 5 und 6 enthaltende Radialebene stromaufwärts und stromabwärts versetzt sind. Bei Erregung der Spulen 13 und 14 in geeigneter Weise entsteht ein oberer Teil des den Strömungsquerschnitt durchsetzenden axialen Magnetfeldes und bei entsprechender Anregung der unteren Spulen 15 und 16 entsteht der untere Teil des den Strömungsquerschnitt axial durchsetzenden Magnetfeldes. (Es sei angemerkt, daß durch gleichsinnige Anregung der Spulen 13 und 15 und gleichsinninger Anregung der Spulen 14 und 16 jeweils den Strömungskanalquerschnitt quer durchsetzende Magnetfelder für die induktive Durchflußmessung gebildet werden können, wobei hier auch Axialkomponenten der Magnetfelder entstehen können). Die in Figur 9 eingezeichneten Magnetfelder haben eine vertikale Mittellängsebene als Symmetrieebene und eine horizontale Mittellängsebene als Symmetrieebene. Die Abzweigleitung 11 kann also sowohl in der gezeigten Stellung nahe der Elektrode 5 an den Kurzschlußring 10 angeschlossen werden, aber auch am höchsten Punkt des Kurzschluß-Leiterringes 10 und am tiefsten Punkt desselben mit Bezug auf die in Figur 9 gezeichnete Lage der Bauteile. Die bezüglich des allgemeinen Aufbaus der Figur 9 entsprechende Darstellung in Figur 10 zeigt eine Einrichtung, bei der das Magnetfelderzeugungssystem gegenüber der Lage nach Figur 9 um 90° um die Längsachse des Strömungskanals gedreht ist. Auch hierbei ergibt sich eine vertikale Mittellängsebene als Symmetrieebene und eine horizontale Mittellängsebene als Symmetrieebene des axialen Magnetfeldes Für den Anschluß der Abzweigleitung 11 an den Kurzschluß-Leiterring 10 gilt das selbe wie für die Einrichtung nach Figur 9 gesagt wurde.

In der Einrichtung nach Figur 11 sind gegenüber der Einrichtung nach Figur 10 nur die Spulen 15 und 16 als Magnetfelderzeugungssystem vorgesehen und erzeugen im linken Teil des Strömungskanals ein axial gerichtetes Magnetfeld. Dieses Magnetfeld hat bei entsprechender Ausrichtung der Spulen 15 und 16 gegenüber der Längsachse des Strömungskanals nur eine horizontale Mittellängsachse als Symmetrieebene. Diese schneidet den Kurzschluß-Leiterring 10 jeweils nahe den Elektroden 5 und 6. Der bevorzugte Anschlußpunkt der Abzweigleitung 11 an den Kurzschluß-Leiterring 10 ist daher der in Figur 11 gezeigte allein.

Schließlich sind in den Figuren 12 und 13 Ausführungsformen der hier angegebenen Einrichtung dargestellt, bei denen das axiale Magnetfeld im Strömungskanalabschnitt 4 durch zwei stromauf und stromab gelegene, den Strömungskanalabschnitt 4 umschlingende Spulen 17 und 18 bzw. eine im Bereich der Elektroden 5 und 6 den Strömungskanalabschnitt 4 umschlingende Spule 19 erzeugt wird. In beiden Fällen ist das erzeugte axiale Magnetfeld mit Bezug auf die Mittellängsachse des Strömungskanalabschnittes 4 rotationssymmetrisch. Demgemäß kann die Abzweigleitung 11 an beliebiger Stelle an den Kurzschluß-Leiterring 10 angesetzt werden.

Zweckmäßig ist es, daß die Abzweigleitungen 11 und 12 von dem jeweiligen bevorzugten Anschlußpunkt weg in Radialrichtung relativ zur Mittellängsachse des Strömungskanales 4 weggeführt sind, so daß bei den jeweils vorausgesetzten Symmetriebedingungen auch in diesen Leitungsabschnitten keine Störspannungen induziert werden. Dieses Merkmal ist jedoch dann nicht von größerer Bedeutung, wenn die Abzweigleitungen verdrillt werden.

Bei der in Figur 6 gezeigten Signalleitungsanordnung ist sowohl mit der Elektrode 6 ein Kurzschluß-Leiterring 10 als auch mit der Elektrode 5 ein Kurzschluß-Leiterring 20 verbunden. Die Kurzschluß-Leiterringe sind durch die Abzweigleitungen 11 und 12 mit der Anzeige- bzw. Registriereinrichtung 8 verbunden.

Figur 7 zeigt eine Ausführungsform, bei der der mit der Elektrode 6 verbundene Leiterring 10 nur in einem Teilbereich unmittelbar an der Kanalwand 3 des Strömungskanalabschnittes 4 anliegt, dann sich jedoch von der Kanalwand nach außen entfernt und einen Schleifenabschnitt 10′ bildet, der seinerseits wiederum über die Abzweigleitung 11 an die Einrichtung 8 angeschlossen ist. Der Schleifenabschnitt 10′ könnte ansich durch ein axiales magnetisches Streufeld durchsetzt werden, welches bei Unsymmetrien dieses Streufeldes zu Störspannungen an der Abzweigleitung 11 führen würde. Die Meßelektrode 5 ist aber an das hier ebenfalls mit 20 bezeichnete Leitungsteil eines Kurzschlußringes angeschlossen, wobei dieses Leitungsteil in demjenigen Umfangsbereich am Strömungskanalabschnitt 4 anliegt, an welchem der Kurzschluß-Leiterring 10 nicht am Strömungskanalabschnitt 4 anliegt. Dann entfernt sich der Leiter des Ringteiles 20 von dem Strömungskanalabschnitt und bildet einen Schleifenabschnitt 20′, der in seiner Querschnittsfläche genau der Querschnittsfläche des Schleifenabschnittes 10′ angepaßt ist. Auf diese Weise entsteht eine Kompensationsschleife, durch die etwa am Anschlußpunkt der Abzweigleitung 11 auftretende Störspannungen mittels Spannungen an der Abzweigleitung 12 kompensiert werden.

Es sei angemerkt, daß die Einrichtung nach Figur 7 nicht etwa obere und untere, von den Leiterringteilen 10 und 20 wegführende Leitungspaare als Zuleitungen zu gesonderten Meßwertumformern enthält, welche dann zu einer Kompensationsschaltung verbunden werden, sondern daß gemäß Figur 7 eine unmittelbare Zusammenschaltung zusammengehöriger der oberen und unteren Leitungspaare der Leitungsschleifen 10′ und 20′ vorgesehen ist, so daß hier gleichsam eine geometrische Kompensation erreicht wird, ohne daß eine vergleichsweise komplizierte elektrische Schaltung erforderlich ist.

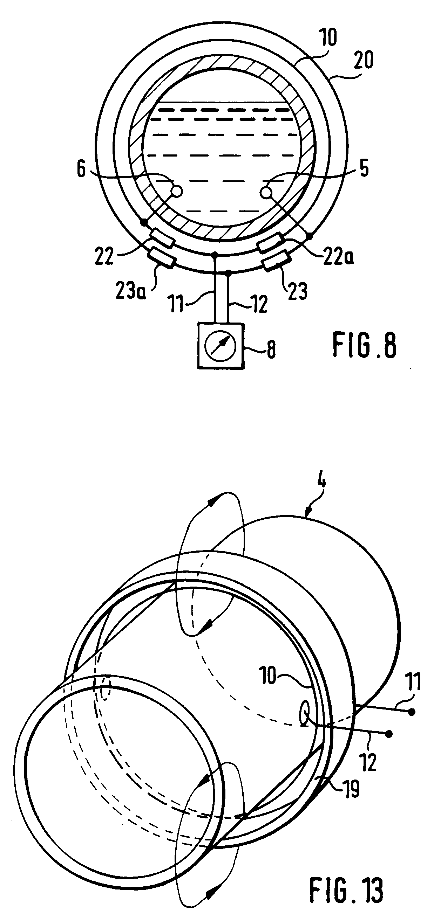

Schlußendlich zeigt Figur 8 die Möglichkeit auf, durch Einschalten von Widerstandselementen 22, 22a und 23, 23a in die Kurzschluß-Leiterringe 10 bzw. 20 die Lage des bevorzugten umfangsmäßigen Anschlußpunktes der Abzweigleitungen 11 bzw. 12 an die Kurzschluß-Leiterringe relativ zur Lage des Anschlusses der Elektroden 6 bzw. 5 so zu verändern, daß bei einer gewünschten Lage der Elektroden 5 und 6, etwa im unteren Bereich des Strömungskanalquerschnittes, die Abzweigleitungen 11 und 12 nahe beieinander nach unten und in radialer Richtung von den Kurzschlußringen weg zu der Einrichtung 8 geführt werden können. Die eingeschalteten Widerstandselemente 22, 22a und 23, 23a bewirken gewünschte Verlagerungen der Nulldurchgänge der Potentialschwingungen längs des Umfanges der Kurzschluß-Leiterringe 10 und 20 mit Bezug auf den durch die Potentiale der Elektroden 6 bzw. 5 vorgegebenen Potentialpegel.

Folgende allgemeine Betrachtungen seien noch zum besseren Verständnis der anliegenden Ansprüche angefügt.

Als Leiterring 10 bzw. als Leiterringe 10 und 20 der Ausführungsformen nach den Figuren 5, 6 und 8 bis 13 sind auch Leitergebilde zu verstehen, welche ihren Verbindungspunkt zum Anschluß der Anzeige- bzw. Registriereinrichtung 8 nicht unmittelbar an der Kanalaußenwand gelegen aufweisen sondern bei denen dieser Verbindungspunkt auch unmittelbar in dem Registrier- bzw. Anzeigegerät 8 gelegen ist, derart, daß beispielsweise in der Ausführungsform nach Figur 6 die Verbindungsleitungen 11 und 12 jeweils durch verdrillte Leiterpaare ersetzt sind und demgemäß die Leiterringe 10 und 20 an den auf der Seite des Registrier- bzw. Anzeigegerätes 8 gelegenen Punkten nur geometrisch, nicht aber auch bereits elektrisch geschlossen sind.

Bei den Meßelektroden 5 und 6 kann es sich abweichend von den in den dargestellten Ausführungsformen gezeigten Elektroden auch um jeweils an der Kanalwandaußenseite montierte, kapazitiv wirkende Elektroden handeln, welche an sich bekannt sind.

Während weiterhin die in der Zeichnung dargestellten Ausführungsbeispiele Strömungskanalabschnitte 4 mit rundem Kanalquerschnitt zeigen, können in entsprechenden Anwendungsfällen auch rechteckige oder quadratische oder ovale oder dergleichen Querschnitte gewählt werden, was dann bei der Auswertung der gewonnenen Meßsignale entsprechend zu berücksichtigen ist.

Den Ausführungsformen nach den Figuren 10, 11, 12 und 13 ist gemeinsam, daß aufgrund der Anordnung des Magnetfelderzeugungssystems von diesem ausschließlich ein axiales Magnetfeld erzeugt wird, so daß an den Meßelektroden 5 und 6 ausschließlich Meßsignale in Abhängigkeit von der Füllhöhe im Strömungskanal auftreten, während Feldkomponenten mit einer Orientierung senkrecht zur Kanalachse und senkrecht zur Verbindungslinie zwischen den Meßelektroden nicht festzustellen sind. Kombiniert man nun Magnetfelderzeugungssysteme nach den Figuren 10 bis 13 mit einem weiteren Magnetfelderzeugungssystem, welches die Aufgabe hat, für die induktive Durchflußmessung ein Magnetfeld mit Orientierung senkrecht zur Kanalachse und senkrecht zur Verbindungslinie zwischen den Meßelektroden zu erzeugen, so ist eine gleichzeitige Füllhöhen- und Durchflußmessung mittels der von den Meßelektroden 5 und 6 abnehmbaren Meßsignale ohne Umschaltung möglich, da im zeitlichen Verlauf der die Durchflußmessung ermöglichende Signalanteil in Phase mit der Erregung liegt, während der die Füllhöhenmessung ermöglichende Signalanteil wegen der ihn verursachenden Induktionsvorgänge eine 90°-Phasenverschiebung gegenüber der Erregung hat, derart, daß die jeweils interessierenden Signalanteile durch entsprechende Phasenfilterung des von den Meßelektroden abnehmbaren Signales erhalten werden können.

## Patentansprüche

1. Einrichtung zur induktiven Messung des Zustandes eines Stromes elektrisch leitfähiger Flüssigkeit in einem Strömungskanal, welcher innerhalb eines elektrisch isolierenden Kanalabschnittes ein Paar mit der Flüssigkeit Kontakt aufnehmender oder mit ihr kapazitiv gekoppelter, in oder an der Kanalwand vorgesehener, über den Kanalquerschnitt hinweg einander gegenüberstehender Elektroden (5, 6) und ein Magnetfelderzeugungssystem (1, 2) zur Anregung eines den Flüssigkeitsstrom durchsetzenden, veränderlichen Magnetfeldes enthält, wobei die Elektroden über eine Signalleitungsanordnung (10, 11, 12, 20) mit einer Anzeige- bzw. Registriereinrichtung (8) verbunden sind, dadurch gekennzeichnet, daß die Signalleitungsanordnung (10, 11, 12, 20) einen mit einer der Elektroden (5, 6) verbundenen Kurzschluß-Leiterring (10) enthält, welcher den Strömungskanal (4) in oder nahe dem von den Elektroden (5, 6) eingenommenen Querschnittsbereich umschlingt und an die Anzeige- bzw. Registriereinrichtung (8) angeschlossen ist.

2. Einrichtung nach Anspruch 1, dadurch gekennzeichnet, daß die Signalleitungsanordnung (10, 11, 12, 20) einen weiteren Kurzschluß-Leiterring (20) enthält, der an die jeweils andere der Elektroden (5, 6,) angeschlossen ist und ebenfalls an die Anzeige- bzw. Registrierungseinrichtung (8) geführt ist.

3. Einrichtung nach Anspruch 1 oder 2, dadurch gekennzeichnet, daß Abzweigleitungen (11, 12) zwischen dem Kurzschluß-Leiterring bzw. den Kurzschluß-Leiterringen (10, 20) vorgesehen sind, welche diese mit der Anzeige- bzw. Registriereinrichtung (8) verbinden, nahe beieinanderliegend, vorzugsweise verdrillt, und insbesondere radial mit Bezug auf die Strömungskanalmittelachse verlegt sind.

4. Einrichtung nach einem der Ansprüche 1 bis 3, dadurch gekennzeichnet, daß mit der Anzeige- bzw. Registriereinrichtung gekoppelte Anschlußpunkte des Kurzschluß-Leiterringes bzw. der Kurzschluß-Leiterringe (10, 20) an Umfangspunkten gelegen sind, in denen sich der Kurzschluß-Leiterring bzw. die Kurzschluß-Leiterringe mit axialen Mittellängsebenen als Symmetrieebenen axialer Magnetfelder des Magnetfelderzeugungssystems schneiden.

5. Einrichtung nach einem der Ansprüche 2 bis 4, dadurch gekennzeichnet, daß die Kurzschluß-Leiterringe (10, 20) den Strömungskanal (4) jeweils mit Teilabschnitten derart umschlingen, daß der Teilabschnitt des einen Kurzschluß-Leiterringes und der Teilabschnitt des anderen Kurzschluß-Leiterringes zusammen den Gesamtumfang der Außenseite des Strömungskanales einnehmen, und daß an die Teilabschnitte jeweils anschließende Leiterschleifen der beiden Kurzschluß-Leiterringe im wesentlichen deckungsgleich sind.

6. Einrichtung nach einem der Ansprüche 1 bis 5, dadurch gekennzeichnet, daß in dem Kurzschluß-Leiterring bzw. in den Kurzschluß-Leiterringen Widerstandselemente (22, 22a; 23, 23a) liegen.

7. Einrichtung nach einem der Ansprüche 1 bis 6, dadurch gekennzeichnet, daß das Magnetfelderzeugungssystem (15, 16) ein auf einer Seite des Kanalabschnittes (4) angeordnetes Paar von Spulen (15, 16) aufweist, deren eine relativ zu der auf dieser Seite des Kanalabschnittes angeordneten Meßelektrode (6) stromaufwärts und deren andere relativ zu dieser Meßelektrode stromabwärts versetzt in solcher Weise an oder nahe der Kanalwand vorgesehen sind, daß diese Spulen bei Erregung ein axiales Magnetfeld erzeugen, das zu einer die Meßelektroden enthaltenden, horizontalen Axialebene symmetrisch ist (Figur 11).

8. Einrichtung nach Anspruch 7, dadurch gekennzeichnet, daß den genannten Spulen (15, 16) gegenüberliegend auf der anderen Seite des Kanalabschnittes (4) ein weiteres, entsprechend angeordnetes und wirkendes Spulenpaar (13, 14) vorgesehen ist (Figur 10).

9. Einrichtung nach einem der Ansprüche 1 bis 6, dadurch gekennzeichnet, daß das Magnetfelderzeugungssystem eine den Kanalabschnitt (4) im Bereich der die Meßelektroden enthaltenden Querschnittsebene umschlingende Spule (19) oder ein Spulenpaar (17, 18) enthält, dessen Spulen den Kanalabschnitt in Querschnittsbereichen stromaufwärts und stromabwärts relativ zum die Meßelektroden enthaltenden Querschnittsbereich umschlingen (Figur 13 bzw. Figur 12).

10. Einrichtung nach einem der Ansprüche 7 bis 9, dadurch gekennzeichnet, daß ein zusätzliches Magnetfelderzeugungssystem zur Erzeugung eines Magnetfeldes vorgesehen ist, das im wesentlichen senkrecht zur Kanalachse und senkrecht zur Verbindungslinie zwischen den Meßelektroden orientiert ist.

11. Einrichtung nach einem der Ansprüche 1 bis 10, dadurch gekennzeichnet, daß der Strömungskanal rechteckigen, quadratischen, ovalen, insbesondere aber runden Querschnitt hat.

## Claims

1. Device for inductively measuring the state of a current of electrically conductive liquid in a flow channel, which contains, within an electrically isolated section of the channel, a pair of electrodes (5, 6) making contact with the liquid or are capacitively coupled with it provided in or on the channel wall and being opposite one another over the cross section of the channel, and a magnetic field generating system (1, 2) for generating a changing magnetic field passing through the stream of liquid, wherein the electrodes are connected to a display or recording device (8) via a signal transmission line arrangement (10, 11, 12, 20), characterized by the fact that the signal transmission line arrangement (10, 11, 12, 20) contains a short-circuit conductor ring (10) connected to one of the electrodes (5, 6), which surrounds the flow channel (4) in or near the cross section area included by the electrodes (5, 6) and is connected to the display and recording device (8).

2. Device according to claim 1, characterized by the fact that the signal transmission line arrangement (10, 11, 12, 20) contains another short-circuit conductor ring (20), which is connected to the other one of said electrodes (5, 6) and is also connected to the display and recording device (8).

3. A device according to claim 1 or 2, characterized by the fact that there are branch conduits (11, 12) between the short-circuit conductor ring or rings (10, 12), which connect them to the display and recording device (8), lie close to one another, preferably twisted, and especially run radially in relation to the center axis of the flow channel.

4. Device according to one of claims 1 to 3, characterized in that connecting points of the short-circuit conductor ring or rings (10, 20) coupled to the display and recording device are placed at peripheral points, in which the short-circuit conductor ring or rings are intersected by axial central longitudinal planes as planes of symmetry of axial magnetic fields of the magnetic field generating system.

5. Device according to one of claims 2 to 4, characterized by the fact that the short-circuit conductor rings (10, 20) surround the flow channel (4) with subsections thereof in such a way that the subsection of a short-circuit conductor ring and the subsection of the other short-circuit conductor ring together include the total periphery of the outside of the flow channel, and by the fact that conductive loops connected to the subsections of the two short-circuit conductor rings are basically congruent.

6. Device according to one of claims 1 to 5, characterized by the fact that there are resistance elements (22, 22a; 23, 23a) series connected in the short-circuit conductor ring or rings.

7. Device according to one of claims 1 to 6, characterized by the fact that the magnetic field generating system (15, 16) has a pair of coils (15, 16) arranged on one side of the channel section (4), one of which is displaced in relation to the measurement electrode (6) on this side of the channel section upstream and the other of which is displaced downstream in relation to that measurement electrode, said coils being provided on or near the wall in such a way that these coils generate an axial magnetic field when excited, that is symmetrical to a horizontal axial plane containing the measurement electrodes (Figrue 11).

8. Device according to claim 7, characterized by the fact that, opposite the coils mentioned (15, 16), there is another pair of coils (13, 14), correspondingly arranged and correspondingly operating on the other side of the channel section (4), (Figure 10).

9. Device according to one of claims 1 to 6, characterized by the fact that the magnetic field generating system contains a coil (19) surrounding the channel section (4) near the cross section of the plane containing the measurement electrodes or a pair of coils (17, 18) whose coils surround the section of the channel in the areas upstream and downstream in relation to the cross sectional area containing the measurement electrodes (Figures 13 and 12, resp.).

10. Device according to one of claims 7 to 9, characterized by the fact that there is an additional magnetic field generating system for generating a magnetic field that is basically perpendicular to the axis of the channel and perpendicular to the connecting line between the measurement electrodes.

11. Device according to one claims 1 to 10, characterized by the fact that the flow channel is rectangular, square, oval, but especially, round in cross section.

## Revendications

1. Dispositif de mesure inductive de l'état d'un courant de liquide électro-conducteur dans un canal d'écoulement, lequel comporte à l'intérieur d'un tronçon à isolation électrique une paire d'électrodes (5, 6) en contact avec le liquide ou en couplage capacitif avec celui-ci, lesquelles électrodes sont montées dans ou sur la paroi du canal et placées l'une en face de l'autre au-delà de la section transversale du canal, et un système générateur de champs magnétiques (1,2), destiné à exciter un champ magnétique variable traversant le courant de liquide, les électrodes étant reliées, par l'intermédiaire d'un circuit d'acheminement des signaux (10, 11, 12, 20), à un dispositif de visualisation ou d'enregistrement (8), caractérisé en ce que le circuit d'acheminement des signaux (10, 11, 12, 20) comporte un anneau conducteur de court-circuit (10) associé à l'une des électrodes (5, 6), lequel enroule le canal d'écoulement (4) dans ou à proximité de la zone de section transversale occupée par les électrodes (5, 6) et est relié au dispositif de visualisation ou d'enregistrement (8).

2. Dispositif selon la revendication 1, caractérisé en ce que le circuit d'acheminement des signaux (10, 11, 12, 20) comporte un anneau conducteur de court-circuit (20) supplémentaire qui est associé à l'autre électrode (5, 6) et relié lui aussi au dispositif de visualisation ou d'enregistrement (8).

3. Dispositif selon la revendication 1 ou 2, caractérisé en ce que des lignes de dérivation (11, 12) sont prévues entre l'anneau conducteur de court-circuit ou les anneaux conducteurs de court-circuit (10, 20), qui relient ceux-ci avec le dispositif de visualisation ou d'enregistrement (8) et qui sont proches l'une de l'autre, de préférence torsadées et placées en particulier radialement par rapport à l'axe médian du canal d'écoulement.

4. Dispositif selon l'une quelconque des revendications 1 à 3, caractérisé en ce que des points de raccordement prévus sur l'anneau conducteur de court-circuit ou les anneaux conducteurs de court-circuit (10, 20), qui sont couplés avec le dispositif de visualisation ou d'enregistrement, sont reliés à des points périphériques, dans lesquels l'anneau conducteur de court-circuit ou les anneaux conducteurs de court-circuit coupent des plans longitudinaux médians axiaux représentant des plans symétriques de champs magnétiques axiaux du système générateur de champs magnétiques.

5. Dispositif selon l'une quelconque des revendications 2 à 4, caractérisé en ce que des tronçons partiels des anneaux conducteurs de court-circuit (10, 20) enroulent chaque fois le canal d'écoulement (4) de façon telle que le tronçon partiel de l'un des anneaux conducteurs de court-circuit et le tronçon partiel de l'autre anneau conducteur de court-circuit occupent ensemble le périmètre total de la face externe du canal d'écoulement et que des boucles conductrices des deux anneaux conducteurs de court-circuit, placées à la suite des tronçons partiels, sont essentiellement congruentes.

6. Dispositif selon l'une quelconque des revendications 1 à 5, caractérisé en ce que des éléments de résistance (22, 22a; 23, 23a) sont logés dans l'anneau conducteur de court-circuit ou les anneaux conducteurs de court-circuit.

7. Dispositif selon l'une quelconque des revendications 1 à 6, caractérisé en ce que le système générateur de champs magnétiques (15,16) comporte une paire de bobines (15,16) disposée sur un côté du tronçon du canal (4), dont l'une, décalée en amont par rapport à l'électrode de mesure (6) disposée de ce côté du tronçon du canal et dont l'autre, décalée en aval par rapport à ladite électrode de mesure, sont placées sur ou à proximité de la paroi du canal, de manière à ce que lesdites bobines produisent, lorsqu'elles sont excitées, un champ magnétique axial qui est symétrique par rapport à un plan axial horizontal contenant les électrodes de mesure (figure 11).

8. Dispositif selon la revendication 7, caractérisé en ce qu'en face desdites bobines (15, 16), placées de l'autre côté du tronçon du canal, est prévue une autre paire de bobines (13, 14) disposée et agissant de manière analogue (figure 10).

9. Dispositif selon l'une quelconque des revendications 1 à 6, caractérisé en ce que le système générateur de champs magnétiques comporte une bobine (19) qui enroule le tronçon du canal au niveau du plan de section transversale contenant les électrodes de mesure, ou une paire de bobines (17, 18) dont les bobines enroulent le tronçon du canal dans des parties de section transversale en amont et en aval par rapport à la partie de section transversale contenant les électrodes de mesure (figure 13 ou figure 12).

10. Dispositif selon l'une quelconque des revendications 7 à 9, caractérisé en ce qu'un système générateur de champs magnétiques supplémentaire est prévu, destiné à produire un champ magnétique qui est orienté essentiellement perpendiculairement à l'axe du canal et perpendiculairement à la ligne de liaison entre les électrodes de mesure.

11. Dispositif selon l'une quelconque des revendications 1 à 10, caractérisé en ce que la section du canal d'écoulement est rectangulaire, carrée, ovale, mais en particulier ronde.
